# FASCICULE DE BREVET EUROPEEN

(11) **EP 1 131 770 B1**
(45) Date de publication et mention de la délivrance du brevet: **15.01.2003**
(21) Numéro de dépôt: 99949072.5
(22) Date de dépôt: 19.10.1999
(51) Int. Cl.: G06K 7/00

(54) **DISPOSITIF DE LECTURE DE CARTE A MICROCIRCUIT**
LESEVORRICHTUNG FÜR EINE CHIPKARTE
CHIP CARD READING DEVICE

(30) Priorité: 20.10.1998 FR 9813148
(43) Date de publication de la demande: 12.09.2001
(73) Titulaire: Xiring, 67552 Vendenheim Cedex (FR)
(72) Inventeur: CHOISET, Bruno, F-78640 Villiers Saint Frédéric (FR)
(74) Mandataire: Debay, Yves
(86) Numéro de dépôt international: FR9902539
(87) Numéro de publication internationale: WO00023935

(56) Documents cités:
- EP-A- 0 510 599
- DE-U- 29 706 664
- FR-A- 2 615 640

## Description

La présente invention concerne le domaine des dispositifs de lecture d'objets portatifs comportant une mémoire et une interface de communication-objet aptes à coopérer avec une interface de communication-lecteur. L'objet portatif peut se présenter sous différentes formes, telles que cartes de crédit, dominos, jetons, etc. On prévoit de préférence d'utiliser une carte à microcircuit, d'un format carte de crédit, pour coopérer avec le lecteur de carte à microcircuit.

De façon conventionnelle, un lecteur de carte à microcircuit comprend un corps pourvu d'une fente dont la hauteur est adaptée à l'épaisseur de la carte et dont la largeur est adaptée à la largeur de la carte. L'utilisateur peut alors faire entrer la carte par un mouvement longitudinal dans le lecteur qui est pourvu d'une interface de communication. L'interface de communication-lecteur est disposée dans le lecteur de façon à être apte à entrer en contact avec l'interface de communication de la carte qui est elle-même disposée sur la carte à des distances par rapport aux bords longitudinaux et latéraux de la carte qui sont normalisées. Ce type de lecteur dans lequel on fait rentrer la carte donne satisfaction mais ne peut être aisément transporté en raison de son encombrement.

On a donc cherché à développer des lecteurs de taille réduite aptes à être transportés dans la poche d'un vêtement, dans un sac à main ou dans une mallette de faibles dimensions. A cet effet, on connaît un lecteur de carte à microcircuit comprenant une face plane pourvue d'une interface de communication apte à venir coopérer avec l'interface de communication de la carte et pourvue de deux butées axiales perpendiculaires pour positionner aisément la carte dans la position adéquate par rapport au lecteur de façon que les deux interfaces de communication soient en contact. Toutefois, il s'avère que l'utilisateur doit serrer entre ses doigts le lecteur et la carte pour garantir un contact satisfaisant entre les interfaces de communication, ce qui est peu pratique.
L'interface de communication du lecteur se présente sous la forme d'une pluralité de lames métalliques de contact faisant légèrement saillie de la face plane du lecteur et pliées de façon à présenter une forme arrondie apte à favoriser le glissement de la carte selon un axe parallèle à la face plane du lecteur. Or, selon un axe perpendiculaire audit premier axe, ces lames métalliques présentent un bord droit qui tend à former une butée pour le mouvement de la carte. Un mouvement de la carte selon l'axe perpendiculaire risque de détériorer, voire même d'arracher ces lames de contact.

Le document FR-A-2 615 640 reflétant le préambule de la revendication 1 concerne un dispositif pour introduire et retirer des cartes selon une direction imposée dans un lecteur, comprenant une fente d'introduction et des moyens de connexion électriques. Il consiste en une paire de galets dont l'axe de rotation est incliné par rapport à la direction d'introduction des cartes. L'espace entre ces galets et leur nature permet d'imposer à la carte un déplacement adéquat pour éviter la déterioration des connecteurs électriques. Les galets présentent un encombrement relativement important en épaisseur.

La présente invention a pour objet de remédier aux inconvénients des dispositifs ci-dessus.

La présente invention a pour objet de proposer un lecteur de carte à microcircuit à interface de communication protégée.

Le dispositif de lecture de carte à microcircuit est prévu pour des cartes du type équipé d'une interface de communication. Le dispositif, selon l'invention, comprend un corps pourvu d'au moins une face plane délimitée sur deux côtés perpendiculaires par deux nervures en saillie par rapport à la face plane, les autres côtés étant dépourvus de nervure, et une interface de communication disposée dans le corps et faisant saillie de la face plane pour permettre une liaison électrique avec l'interface de communication de la carte à microcircuit. Le dispositif comprend un moyen pour bloquer un mouvement de la carte parallèlement à la face plane selon une direction parallèle à l'une des nervures pour protéger l'interface de communication dudit dispositif, tout en autorisant un tel mouvement selon une direction parallèle à l'autre nervure. Le moyen de blocage comprend une languette souple.

On autorise ainsi l'insertion de la cane dans le sens longitudinal des lames de l'interface-lecteur tout en l'interdisant dans le sens transversal.

Avantageusement, le dispositif comprend une paroi plane parallèle à la face plane, supportée par les nervures, et formant avec la dite face plane une fente apte à recevoir une carte à microcircuit.

Dans un mode de réalisation de l'invention, la paroi plane présente sensiblement la même forme que la face plane.

Dans un mode de réalisation de l'invention, la paroi plane recouvre l'interface de communication disposée dans le corps et le moyen de blocage.

Avantageusement, la languette est souple pourvue d'une extrémité solidaire du dispositif et d'une extrémité libre en saillie sur le trajet possible de la carte.

Dans un mode de réalisation de l'invention, l'extrémité libre de la languette forme une butée transversalement à la dite languette.

Dans un mode de réalisation de l'invention, l'extrémité libre de la languette forme une surface de rampe apte à recevoir le contact et l'appui de la carte lors d'un mouvement de la dite carte parallèlement à la languette qui provoque l'effacement de la languette.

Avantageusement, la languette est pourvue d'une extrémité solidaire de la paroi plane.

Dans un mode de réalisation de l'invention, la languette est monobloc avec la paroi plane.

Dans un autre mode de réalisation de l'invention, la languette est fixée sur la paroi plane.

Ainsi, on dispose d'un lecteur de carte à microcircuit de taille réduite, par exemple pouvant être rattaché à un porte-clefs, et autorisant l'insertion de la carte selon un axe unique, en interdisant l'insertion selon d'autres axes.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels
la figure 1 est une vue de dessus d'une carte à microcircuit;
la figure 2 est une vue de dessus en élévation d'un lecteur de carte à microcircuit;
la figure 3 est une vue arrière en élévation du lecteur selon l'invention;
la figure 4 est une vue de dessous en élévation du lecteur de la figure 3;
la figure 5 est une vue en coupe selon V-V de la figure 4;
la figure 6 montre une variante de la figure 3; et
la figure 7 est une vue en perspective d'une languette de lecteur selon un autre mode de réalisation de l'invention.

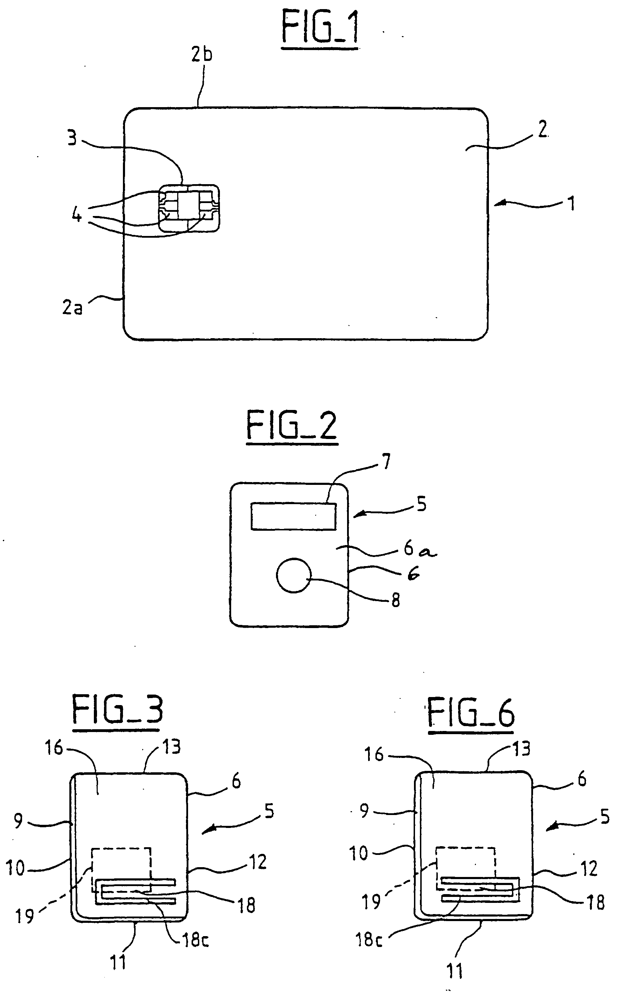

Comme on peut le voir sur la figure 1, la carte à microcircuit 1 comprend un corps 2 de forme rectangulaire, de faible épaisseur, réalisé généralement en matériau synthétique et dans lequel sont disposés, de façon non représentée, différents moyens électroniques tels. qu'une mémoire. Une interface de communication 3 est prévue à un emplacement déterminé de la carte et se présente sous la forme de contacts électriques généralement comprenant des pistes métalliques reliées aux moyens électroniques de la carte 1 et affleurant la surface du corps 2 de la carte. Ces pistes conductrices se terminent par des plots 4 prévus pour entrer en communication avec une interface correspondante d'un lecteur de carte à microcircuit.

Sur la figure 2, on voit un lecteur 5 de carte à microcircuit, qui comprend un corps 6, par exemple réalisé en matériau synthétique rigide. Le corps 6 comprend une face avant 6a qui incorpore un afficheur 7, par exemple du type à cristaux liquides, apte à afficher différentes informations lues par le lecteur 5, et un bouton 8 permettant d'activer la lecture d'une carte à microcircuit par le lecteur 5. Toutefois, la présence de l'afficheur 7 et du bouton 8 n'est pas indispensable, dans la mesure où la lecture peut être autorisée dès que la carte à microcircuit est convenablement disposée par rapport à une interface de communication du lecteur 5, et que l'opération de lecture n'a pas nécessairement pour but d'afficher les informations lues.

Sur les figures 3 à 5, on voit que la face arrière du lecteur 5 comprend une zone plane 9 qui débouche sur deux côtés adjacents 10 et 11 du corps 6. Sur deux autres côtés 12 et 13 du corps 6, la zone plane 9 est délimitée par deux nervures 14 et 15. Les côtés 12 et 13 sont mutuellement perpendiculaires. Les côtés 10 et 11 sont mutuellement perpendiculaires dans l'exemple illustré, mais pourraient présenter une autre forme, par exemple arrondie ou ellipsoïdale. On pourrait même envisager un lecteur présentant une forme générale de triangle rectangle.

Les nervures 14 et 15 sont de hauteur au minimum égale à l'épaisseur d'une carte à microcircuit et, de préférence, très légèrement supérieure. Les nervures 14 et 15 supportent une paroi plane 16 qui définit avec la zone plane 9 une fente 17 de hauteur égale à celle des nervures 14 et 15. La paroi plane 16 est de forme générale semblable à celle du corps 6 du lecteur 5. Dans l'exemple illustré, la paroi 16 est de taille très légèrement inférieure, en étant en retrait par rapport aux bords 10 et 11.

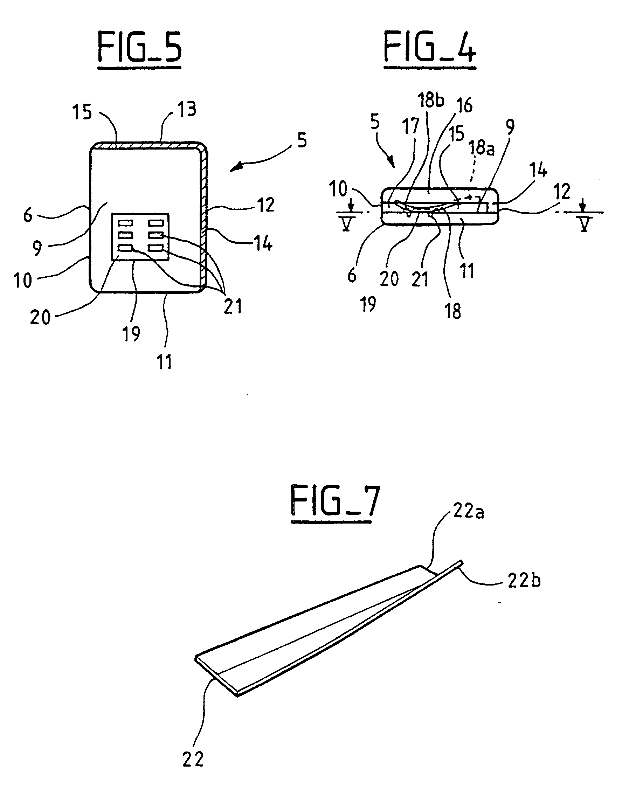

Dans la paroi 16, est prévue une languette 18 venue de moulage avec la paroi plane 16 et le corps 6 et rattachée à la paroi plane 16 du côté de la nervure 14. La languette 18 s'étend parallèlement à la nervure 15 et présente une concavité orientée vers le haut et une convexité orientée vers le bas (figure 4). La languette 18 présente une première portion 18a directement issue de la paroi plane 16 et qui s'étend vers le bas dans la fente 17, et une deuxième portion 18b, dite portion d'extrémité, qui remonte vers le haut dans le sens illustré sur la figure 4, et tend à dégager la fente 17.

A titre de variante, on peut prévoir une languette 18 fixée par collage sur la paroi plane 16, sur la nervure 14 ou encore sur le corps 6. Dans ce cas, la languette peut être réalisée dans un matériau différent de celui du corps 6 et lui conférant une grande élasticité.

Le lecteur 5 comprend une interface de communication 19 encastrée dans la zone plane 9 et affleurant celle-ci. L'interface de communication 19 comprend un support 20 réalisé en matériau isolant, en général synthétique, et une pluralité, six dans l'exemple illustré, de contacts électriques 21. Chaque contact électrique 21 se présente sous la forme d'une lame conductrice, par exemple réalisée en cuivre ou en laiton, orientée parallèlement à la nervure 15. Chaque lame est pliée de façon à présenter une bosse arrondie faisant saillie de la paroi plane 9 dans la fente 17.

On voit, sur la figure 3, que la languette 18 est disposée légèrement plus bas que l'interface de communication 19. En d'autres termes, selon un axe perpendiculaire à la nervure 15 et parralèle à la zone plane 9, l'interface de communication 19 est disposée entre la nervure 15 et le bord 18c la languette 18. Il est avantageux que la languette 18, tout en étant plus bas que l'interface 19, chevauche légèrement cette dernière car cela interdit un éventuel mouvement d'insertion complexe d'abord parallèlement à la nervure 15 effaçant ainsi la languette 18 sans entrer en contact avec l'interface 19, puis parallèlement à la nervure 14, ce qui pourrait alors détériorer les contacts 21.

Un utilisateur peut se servir du lecteur 5 de la façon suivante. Il se saisit du lecteur 5 et d'une carte à microcircuit 1 et présente la carte 1 en alignement avec la fente 17, le coin de la carte 1 le plus proche de l'interface de communication 3 étant disposé à proximité de la nervure 15. Puis, il fait entrer la carte 1 dans la fente 17 selon un mouvement parallèle à la nervure 15. Le bord 2a de la carte 1 entre en contact avec l'extrémité libre 18b de la languette 18 et provoque son effacement vers le haut, dans la paroi plane 16, en coopérant avec la surface convexe de ladite portion 18b. Puis, la carte vient frotter sur les contacts électriques 21 et vient en butée en fin de mouvement contre la nervure 14, en étant restée au cours du mouvement en contact de frottement avec la nervure 15. Les interfaces de communication 3 et 19 sont alors superposées, chaque contact électrique 21 correspondant à un plot 4 de la carte 1.

Une fois la carte 1 insérée dans la fente 17, la languette 18 exerce sur la carte 1 un effort élastique tendant à la plaquer sur l'interface de communication 19, ce qui favorise le contact électrique. On comprend donc qu'il est intéressant de disposer la languette à proximité de l'interface de communication 19 pour profiter de cet effort élastique, mais légèrement décalée, pour lui permettre de jouer son rôle de moyen d'interdiction de l'insertion de la carte 1. Pour retirer la carte, on effectue le mouvement en sens inverse. On peut également la retirer par un mouvement parallèle à la nervure 14.

Au contraire, si l'on tente d'insérer la carte 1 selon un mouvement parallèle à la nervure 14 en insérant la carte tout d'abord par le côté 11, le bord 2b de la carte 1 qui est généralement droit entre en contact d'abord avec le bord 18c de la languette 18 qui est également un bord droit perpendiculaire à la zone plane 9, et parallèle à la nervure 15.

Le mouvement de la carte 1 est ainsi bloqué sans possibilité de provoquer l'effacement de la languette 18 vers le haut dans la paroi plane 16. On voit donc que l'insertion de la carte 1 est autorisée selon un axe et interdite selon un autre axe perpendiculaire au premier axe et ce pour préserver les contacts électriques 21 qui, en l'absence de languette 18, risqueraient d'être abîmés ou arrachés par le bord droit 2b de la carte 1 entrant dans la fente 17 par le côté 11, selon un mouvement parallèle à la nervure 14 et donc perpendiculaire à l'orientation des lames formant les contacts électriques 21.

En variante, on a représenté sur la figure 6 un lecteur 5 dont la languette 18 est inversée par rapport à celle de la figure 3. La portion d'extrémité 18b de la languette 18 est adjacente à la nervure 14, tandis que la première portion 18a, rattachée à la paroi plane 16, est distale par rapport à la nervure 14. Cette languette 18 peut être plus souple que celle décrite ci-dessus dans la mesure où sa déformation élastique pourra induire une légère déformation élastique de la paroi plane 16.

Un autre mode de réalisation a été illustré sur la figure 7, dans laquelle la languette 22 présente un bord 22a d'extrémité libre droit, perpendiculaire à la zone plane 9 du lecteur. La languette 22 comprend une surface oblique 22b apte à entrer en contact avec le bord droit 2a de la carte 1 en provoquant le soulèvement de la languette 22, tandis que le bord droit 22a interdit un mouvement de la carte dans le sens longitudinal de la languette 22. On comprend que la languette 22 assure la même fonction que la languette 18 mais serait disposée perpendiculairement à cette dernière, c'est-à-dire parallèlement à la nervure 14.

Grâce à l'invention, on dispose d'un lecteur de taille réduite pour carte à microcircuit, apte à venir coopérer avec seulement deux côtés adjacents de la carte tout en ayant un positionnement satisfaisant et un maintien suffisant sur la carte sans détériorer les contacts des interfaces de communication et sans que l'utilisateur n'ait besoin de presser la carte contre le lecteur avec ses doigts.

Bien entendu, la languette peut présenter différentes formes, par exemple à une ou deux courbures, être perpendiculaire ou parallèle à la direction d'insertion autorisée, etc. La languette peut également être intégrée au support 20 des contacts électriques 21 ou être issue de la zone plane 9 du corps 6, mais avec l'inconvénient que l'on ne bénéficie pas de l'effort d'appui exercé par la languette sur la carte en direction des plots de contact électriques. On peut également prévoir de disposer un détecteur de présence de carte que l'on positionnera, par exemple, dans le coin de la fente 17où se rejoignent les nervures 14 et 15, pour éviter une lecture de la carte tant que les interfaces de communication ne sont pas bien positionnées l'une par rapport à l'autre.

## Revendications

1. Dispositif de lecture (5) de carte (1) à microcircuit du type équipé d'une interface de communication (3), le dispositif comprenant un corps (6) pourvu d'au moins une face plane (9) délimitée sur deux côtés perpendiculaires par deux nervures (14, 15) en saillie par rapport à la face plane, les autres côtés étant dépourvus de nervure, et une interface de communication (19) disposée dans le corps et faisant saillie de la face plane pour permettre une liaison électrique avec l'interface de communication (3) de la carte à microcircuit, comprenant un moyen pour bloquer un mouvement de la carte parallèlement à la face plane (9) selon une direction parallèle à l'une des nervures pour protéger l'interface de communication (19) dudit dispositif, tout en autorisant un tel mouvement selon une direction parallèle à l'autre nervure, **caractérisé par le fait que** le moyen de blocage comprend une languette souple (18, 22).

2. Dispositif selon la revendication 1, **caractérisé par le fait qu'**il comprend une paroi plane (16) parallèle à la face plane, supportée par les nervures (14, 15), et formant avec ladite face plane (9) une fente (17) apte à recevoir une carte à microcircuit (1).

3. Dispositif selon la revendication 2, **caractérisé par le fait que** la paroi plane (16) présente sensiblement la même forme que la face plane (9).

4. Dispositif selon la revendication 2 ou 3, **caractérisé par le fait que** la paroi plane (16) recouvre l'interface de communication (19) disposée dans le corps et le moyen de blocage (18, 22).

5. Dispositif selon l'une quelconque des revendications précédentes, **caractérisé par le fait que** la languette souple (18, 22) est pourvue d'une extrémité (18a) solidaire du dispositif et d'une extrémité libre (18b, 22a) en saillie sur le trajet possible de la carte (1).

6. Dispositif selon la revendication 5, **caractérisé par le fait que** l'extrémité libre (18b, 22a) de la languette forme une butée transversalement à ladite languette (18, 22).

7. Dispositif selon la revendication 5 ou 6, **caractérisé par le fait que** l'extrémité libre (22a) de la languette forme une surface de rampe (22b) apte à recevoir le contact et l'appui de la carte lors d'un mouvement de ladite carte parallèlement à la languette qui provoque l'effacement de la languette.

8. Dispositif selon l'une quelconque des revendications 5 à 7, **caractérisé par le fait que** la languette (18, 22) est pourvue d'une extrémité solidaire de la paroi plane (16).

9. Dispositif selon la revendication 8, **caractérisé par le fait que** la languette (18, 22) est monobloc avec la paroi plane (16).

10. Dispositif selon la revendication 8, **caractérisé par le fait que** la languette (18, 22) est fixée sur la paroi plane (16).

## Patentansprüche

1. Lesevorrichtung (5) für eine Chipkarte (1) vom Typ mit einer Kommunikations-Schnittstelle (3), wobei die Vorrichtung folgendes aufweist: einen Körper (6), der mit wenigstens einer ebenen Fläche (9) versehen ist, die auf zwei zueinander senkrechten Seiten durch zwei zur ebenen Fläche vorstehenden Rillen (14, 15) begrenzt ist, wobei die anderen Seiten keine Rillen aufweisen, eine Kommunikations-Schnittstelle (19), die im Körper angeordnet ist und aus der ebenen Fläche vorsteht, um eine elektrische Verbindung mit der Kommunikations-Schnittstelle (3) der Chipkarte zu ermöglichen, und ein Mittel zum Blockieren einer Bewegung der Karte parallel zur ebenen Fläche (9) entlang einer zu einer der Rillen parallelen Richtung, um die Kommunikations-Schnittstelle (19) der Vorrichtung zu schützen, während eine solche Bewegung entlang einer zur anderen Rille parallelen Richtung zugelassen ist, **dadurch gekennzeichnet, daß** das Blockiermittel eine biegsame Lasche (18, 22) aufweist.

2. Vorrichtung nach Anspruch 1, **dadurch gekennzeichnet, daß** sie eine zur ebenen Fläche (16) parallele ebene Wand aufweist, die durch die Rillen (14, 15) gestützt ist und mit der ebenen Fläche (9) einen Spalt (17) bildet, in dem die Chipkarte (1) aufgenommen werden kann.

3. Vorrichtung nach Anspruch 2, **dadurch gekennzeichnet, daß** die ebene Wand (16) im wesentlichen die gleiche Form wie die ebene Fläche (9) aufweist.

4. Vorrichtung nach Anspruch 2 oder 3, **dadurch gekennzeichnet, daß** die ebene Wand (16) die im Körper angeordnete Kommunikations-Schnittstelle (19) und das Blockiermittel (18, 22) überdeckt.

5. Vorrichtung nach einem der vorstehenden Ansprüche, **dadurch gekennzeichnet, daß** die biegsame Lasche (18, 22) mit einem mit der Vorrichtung fest verbundenen Ende (18a) und einem in den möglichen Weg der Karte (1) vorstehenden freien Ende (18b, 22a) versehen ist.

6. Vorrichtung nach Anspruch 5, **dadurch gekennzeichnet, daß** das freie Ende (18b, 22a) der Lasche einen Anschlag quer zur Lasche (18, 22) bildet.

7. Vorrichtung nach Anspruch 5 oder 6, **dadurch gekennzeichnet, daß** das freie Ende (22a) der Lasche eine Auflauffläche (226) bildet, die den Kontakt und den Druck der Karte bei einer Bewegung der Karte parallel zur Lasche aufnehmen kann, was das Ausweichen der Lasche bewirkt.

8. Vorrichtung nach einem der Ansprüche 5 bis 7, **dadurch gekennzeichnet, daß** die Lasche (18, 22) mit einem mit der ebenen Wand (16) fest verbundenen Ende versehen ist.

9. Vorrichtung nach Anspruch 8, **dadurch gekennzeichnet, daß** die Lasche (18, 22) einteilig mit der ebenen Wand (16) ausgebildet ist.

10. Vorrichtung nach Anspruch 8, **dadurch gekennzeichnet, daß** die Lasche (18, 22) auf der ebenen Wand (16) befestigt ist.

## Claims

1. Reading device (5) for a chip card (1) of the type equipped with a communication interface (3), the device comprising a body (6) provided with at least one plane face (9) delimited on two perpendicular sides by two ribs (14, 15) projecting from the plane face, the other sides having no ribs, and a communication interface (19) arranged in the body and projecting from the plane face so as to permit electrical connection with the communication interface (3) of the chip card, comprising a means for blocking movement of the card parallel to the plane face (9) in a direction parallel to the one of the ribs in order to protect the communication interface (19) of said device, while permitting such a movement in a direction parallel to the other rib, **characterised by** the fact that the blocking means comprises a flexible strip (18, 22).

2. Device according to Claim 1, **characterised by** the fact that it comprises a plane wall parallel to the plane face (16), supported by the ribs (14, 15), and forming, together with said plane face (9), a slot (17) capable of accommodating a chip card (1).

3. Device according to Claim 2, **characterised by** the fact that the plane wall (16) has substantially the same shape as the plane face (9).

4. Device according to Claim 2 or 3, **characterised by** the fact that the plane wall (16) covers the communication interface (19) arranged in the body and the blocking means (18, 22).

5. Device according to any one of the preceding claims, **characterised by** the fact that the flexible strip (18, 22) is provided with an end (18a) integral with the device and a free end (18b, 22a) projecting over the possible path of the card (1).

6. Device according to Claim 5, **characterised by** the fact that the free end (18b, 22a) of the strip forms a stop transverse to said strip (18, 22).

7. Device according to Claim 5 or 6, **characterised by** the fact that the free end (22a) of the strip forms a ramp surface (22b) capable of receiving contact and support from the card during parallel movement of said card relative to the strip, which causes the effacement of the strip.

8. Device according to any one of Claims 5 to 7, **characterised by** the fact that the strip (18, 22) is provided with an end integral with the plane wall (16).

9. Device according to Claim 8, **characterised by** the fact that the strip (18, 22) is made in one piece with the plane wall (16).

10. Device according to Claim 8, **characterised by** the fact that the strip (18, 22) is fixed to the plane wall (16).
